# EUROPEAN PATENT APPLICATION

(11) **EP 1 599 019 A2**
(43) Date of publication of application: **23.11.2005**
(21) Application number: 05300376.0
(22) Date of filing: 16.05.2005
(51) Int. Cl.: H04L 29/06

(54) **Network equipment with embedded movable secure devices**

(30) Priority: 17.05.2004 US 846542
(71) Applicant: ALCATEL, 75008 Paris (FR)
(72) Inventor: Marquet, Bertrand, Ottawa, Ontario K1H 1B4 (CA); Robert, Jean-Marc, Ottawa, Ontario K1N 6L2 (CA); Cosquer, François J. N., Kanata, Ontario K2T 1G5 (CA)
(74) Representative: Hervouet, Sylvie

(57) **Abstract**

A system for improving security of management and control functions at a network element in a communications network is described. The control card of the network element is configured to function in association with an execution device such as a smartcard. The execution device has embedded thereon one or several processors each implementing specific security related operations. This limits access to the network element which, in turn, minimizes access to sensitive and confidential information.

## Description

### Field of the Invention

This invention relates to digital communications networks and more particularly to systems and methods of providing secured management and control of network elements in communications network.

### Background

Communications networks including the Internet are rapidly expanding and evolving world wide to provide access to an ever increasing range of services. To provide flexibility and universality, open protocol standards are being developed and adopted. Unfortunately, these open standards tend to make networks more vulnerable to security related attacks. As a result an attacker can potentially gain access to sensitive and confidential information at remote network elements.

To achieve stronger security in this open environment it follows that network elements need to provide more secure management and control including support for functions such as operator and device authentication, configuration sealing, cryptographic support, etc.

With the current approach used for implementing secured management and control all applications including applications which manipulate sensitive and confidential data share the same execution context. Sensitive and confidential data is relative to each product but represents information that is vital to the proper execution of the network element or for which disclosure is critical to the network element or for which disclosure is critical to the network element or the operator. The consequence of such implementation is that any attack on one piece of vulnerable software can potentially allow access to sensitive and confidential data on network elements. From that point on the network element is compromised and the secured management and control functionality is no longer possible. Furthermore, it is very possible that such a scenario will remain undetected by the network management systems until some anomalies detection system alerts the network operator.

This simple, yet potentially highly damaging scenario is based on a process of exploiting the weakest link in the system. The vulnerability inherent with systems using classical memories and storage that do not allow isolation and access restriction to sensitive confidential data is addressed by the present invention. For better security, sensitive and confidential data should not be accessible outside the context of the application.

### Summary of the Invention

There is a requirement, therefore, to improve the security of network elements in a communication system.

The solution proposed by the present invention uses a secured execution device associated with the control card of a network element to perform secured management and control functions. The execution of these functions is isolated and secured from other processes running on the control card and therefore these functions cannot be compromised easily by rogue processes.

To achieve improved security in an open environment, network elements have embedded on a control card one or more generic processors which are associated with standard memory or storage devices such as DRAM or flashcards to store configurations or security elements for management or control operations for example authentication for SNMP, BGP and OSPF.

Therefore, in accordance with a first aspect of the present invention there is provided a system for performing secured management and control functions for network element in a digital communications network, the network element having a control card to control security functionality of the network element. According to the invention the system comprises an interface device to interface with the control card and an execution device operatively associated with the interface device for executing selected secured management and control functions.

In accordance with a second aspect of the invention there is provided a method of performing secured management and control functions in a network element in a digital communications network, the network element having a control card to control security functionality of the network element the method comprising: providing an interface device to interface with the control card; and providing an execution device operatively associated with the interface device for executing selected security management and control functions.

### Brief Description of the Drawings

The invention will now be described in greater detail with reference to the attached drawings wherein:

Figure 1 illustrates an example of interface connector in closed and opened positions for a control card; and

Figure 2 illustrates the homogeneity of terminals and element security.

### Detailed Description of the Invention

According to the present invention security, including support for functions such as operator and device authentication, is provided by execution devices associated with control cards having embedded thereon one or several generic processors associated with standard memory or storage devices. Such memory or storage devices include DRAM or flash cards which store configurations or security elements for management or control operations.

In order to implement secured management and control functions on a network element the present invention provides a secured system which allows controlled and secure access to sensitive and confidential data. Further, the invention provides a secure system which allows isolation where isolation is a property that allows some process to run in a complete and separate environment from other processes. In addition, the system allows significant functionality evolution and changes over time through software updates without any impact of the hardware architecture. In this context significant means that the system can be completely changed without modifying the existing hardware. The changes and functionality evolution do not impact on the secure access and isolation features.

In order to implement these three aspects the control card on the network element is provided with an interface device which allows for the introduction of an execution device to store configuration or security elements for management or control operations of the network element.

The interface device can be a connector such as a SIMLOCK for use with smartcards. An execution device could be one of various types of smartcards including but not limited to a JavaCard.

It will be apparent to one skilled in the art that such execution devices are used in telephone architectures and financial applications for security purposes. It is believed, however, that such an implementation has not previously been used in a network management context for use in conjunction with network element control cards.

The aforementioned aspects of the present invention are provided as follows. An execution device such as a JavaCard is known to be a secure execution device. It has built in Java security properties including security sandbox oriented domains and signed software upgrades. Security is fully defined using the ISO 15408 Common Criteria standard in the JavaCard protection profile.

The JavaCard is implemented on a smartcard that implements the concept of isolation in process execution. The card also has special directories for storing secret data that cannot be accessed logically or physically outside the card. This feature could be used to store all security parameters that have to be kept secret and just used by the security management and control software that would be embedded on the card. In this way, the network element is only activated if the execution device is detected. This effectively minimizes the window of exposure of sensitive and critical information.

It will be understood that the execution device can easily be removed and changed with a new fully updated version or by using various mechanisms the new update can be downloaded in a secured way using updated software. Thus, initialization and configuration can be done by an end user in a card holder environment at the user defined level of security with minimal hardware/ software set up.

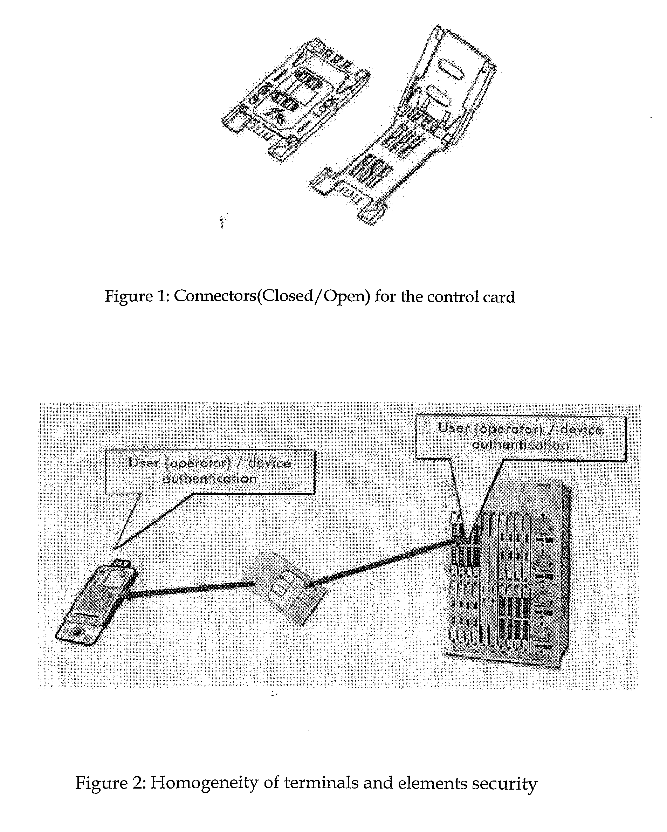

The use of a smartcard is currently used in terminals such as mobile telephones. Through the present invention the level of security from the terminal to the network element could be used to seamlessly implement end to end security solutions. This is shown in Figure 2. The association of a smartcard type execution device in the network element provides a level of security that is possible by having a security chip directly on the line/ control card but with more flexibility and ability to upgrade security features.

It is within the full scope of the present invention to incorporate into the control card several instances of an execution device. Thus, different security aspects could be treated separately using multiple smartcards each addressing different aspects. The different instances might also be configured for use by more than one operator and activation would be dependent on execution devices being available. The multiple instances could improve reliability of the security program.

In the event of multiple or several instances of execution devices, synchronization in real time may be required. It is also within the scope of the present invention to provide such synchronization in order to protect sensitive and confidential data which is stored between specific devices.

Although particular embodiments of the invention have been described and illustrated it will be apparent to one skilled in the art that numerous changes can be made with departing from the basic concept. It is to be understood, however, that such changes will fall within the full scope of the invention as defined by the appended claims.

## Claims

1. A system for performing secured management and control functions for a network element in a digital communications network, the network element having a control card to control security functionality of the network element the system comprising an interface device to interface with the control card and an execution device operatively associated with the interface device for executing selected security management and control functions.

2. The system as defined in claim 1 wherein multiple execution devices are provided for executing multiple selected management and control functions.

3. The system as defined in claim 2 further having means to synchronize state between the multiple executing devices.

4. The system as defined in claim 1 for providing secure access to sensitive and confidential data.

5. The system as defined in claim 1 which provides isolation to allow some process to run in a complete and separate environment from other processes.

6. The system as defined in claim 1 for allowing functionality evolution and changes without any impact on hardware architecture.

7. The system as defined as defined in claim 6 wherein the functionality evolution is effected through software updates.

8. The system as defined in claim 1 wherein the execution devices have special directories for storing secret data that cannot be accessed logically or physically outside the device.

9. The system as defined in claim 1 wherein the execution devices have secured parameters for use by the secured management and control software embedded on the execution device.

10. A method of performing secured management and control functions in a network element in a digital communications network, the network element having a control card to control security functionality of the network element the method comprising:
providing an interface device to interface with the control card; and
providing an execution device operatively associated with the interface device for executing selected security management and control functions.

11. The method as defined in claim 10 wherein multiple execution devices are provided for executing multiple selected management and control functions.

12. The method as defined in claim 11 further having means to synchronize state between the multiple executing devices.

13. The method as defined in claim 10 for providing secure access to sensitive and confidential data.

14. The method as defined in claim 10 for providing isolation to allow some process to run in a complete and separate environment from other processes.

15. The method as defined in claim 10 for allowing functionality evolution and changes without any impact on hardware architecture.

16. The method as defined as defined in claim 15 wherein the functionality evolution is effected through software updates.

17. The method as defined in claim 10 wherein the execution devices have special directories for storing secret data that cannot be accessed logically or physically outside the device.

18. The method as defined in claim 10 wherein the execution devices have secured parameters for use by the secured management and control software embedded on the execution device.
